# EUROPEAN PATENT APPLICATION

(11) **EP 4 763 719 A1**
(43) Date of publication of application: **24.06.2026**
(21) Application number: 25220388.0
(22) Date of filing: 03.12.2025
(51) Int. Cl.: B65B 9/207, B65B 57/04, B65B 57/06, B65B 57/08, G05B 19/418, B65B 51/30, B65B 55/10, B65B 57/18, B65B 61/24

(54) **METHOD AND PACKAGING MACHINE FOR PRODUCING SEALED PACKAGES CONTAINING A POURABLE PRODUCT**

(30) Priority: 20.12.2024 IT 202400029397
(71) Applicant: Tetra Laval Holdings & Finance S.A., 1009 Pully (CH)
(72) Inventor: LAHRACHE, Achraf, 41123 MODENA (IT); SANIBONDI, Paolo, 41123 MODENA (IT); MARSELLA, Angelo, 41123 MODENA (IT); MONARI, Mattia, 41123 MODENA (IT); MELANDRI, Marco, 41123 MODENA (IT); FERRARINI, Filippo, 41123 MODENA (IT)
(74) Representative: Tetra Pak Patent Attorneys

(57) **Abstract**

There is described a method for producing sealed packages (2) containing a pourable product, the method comprises the steps of:
a) advancing a web (4) of packaging material along an advancing path (P);
b) folding the web (4) into a tube (3);
c) filling the tube (3) with the pourable product by means of a filling device (7);
d) detecting a deviation or anomaly at the web (4) indicative of the state of the packaging material;
e) adjusting the operation of the filling device (7) as a function of the detection.

## Description

### TECHNICAL FIELD

The present invention relates to a method for producing sealed packages containing a pourable product, preferably a pourable food product.

The present invention also relates to a packaging machine for producing sealed packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-sealable material, e.g. polyethylene.

In the case of aseptic packages for long-storage products, such as UHT milk, the packaging material also comprises a layer of oxygen-barrier material, e.g. an aluminum foil, which is superimposed on a layer of heat-sealable material, and is in turn covered with another layer of heat-sealable material forming the inner face of the package eventually contacting the food product.

Packages of this sort are normally produced on fully automatic packaging machines, which form and fill the packages starting from a multilayer web of packaging material.

In particular, according to a non-limiting example of a packaging machine, a continuous tube is formed from the web of packaging material which is initially wound in a reel and fed through a plurality of unwinding rollers along an advancing path.

The web of packaging material is typically sterilized, e.g. by applying a chemical sterilizing agent, such as hydrogen peroxide solution, which, once the sterilization is completed, is removed from the surfaces of the packaging material, e.g. evaporated by heating.

The sterilized web is then maintained in a closed, sterile environment, and, while advanced by the aforementioned unwinding rollers along the advancing path, is folded to form the tube by means of a known web folding unit and then sealed longitudinally.

In order to form the tube, the sterilized web of packaging material is vertically fed through a number of folding devices, which are part of said web folding unit and which sequentially interact with the packaging material to fold it gradually from a sheet-like configuration into a tube shape.

More specifically, the folding devices are arranged in succession, along a tube-forming path, and comprise respective folding members, in particular rollers, arranged to define a series of passages for the packaging material varying gradually in section from a C-shape to a substantially circular shape.

Before reaching the folding devices, the web of packaging material is fed through a strip application unit configured for applying a sealing strip of heat-sealable material, which is first applied on the packaging material and subsequently heat sealed thereto to form the tube.

More specifically, a first longitudinal portion of the sealing strip is applied and heat-sealed to a first longitudinal edge of the web at an applying station, in particular the sealing strip is applied on the face of the packaging material eventually forming the inside of the packages. After such application, a second longitudinal portion of the sealing strip projects from the first longitudinal edge.

On interacting with the folding members, a second longitudinal edge of the web is laid on the outside of the first longitudinal edge with respect to the axis of the tube being formed. In detail, the sealing strip is located entirely within the tube, and the face of the second longitudinal edge facing the axis of the tube is superimposed partly on the second portion of the sealing strip and partly on the face of the first longitudinal edge located on the side opposite to the first portion of the sealing strip.

At this point, the sealing strip is applied to the web by performing a heating step and a pressing step.

In order to perform the package forming operations, the tube is continuously fed along a straight vertical direction, is filled with the sterilized food product from above and is formed, sealed and subsequently cut along equally spaced transversal cross-sections extending along a direction orthogonal to the vertical direction, according to a manner known and not described in detail.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof. The finished packages are thereby obtained.

The occurrence of deviations or anomalies in the packaging material detected along the advancing path, which might affect the web or tube integrity, is known.

For example, a detectable deviation or anomaly on the packaging material may be defined by an erroneous or non-nominal splice of two reels of web of packaging material.

In more detail, there may be an imperfect splice at the splice region between the end portion of a first web and the initial portion of a second web.

To this end, the known packaging machines are equipped with at least one sensor configured to detect such deviation or anomaly and with a control unit configured to receive the detection signal from the sensor.

In the known configurations, upon receiving the signal from the sensor, the control unit controls a discard of a predetermined number of packages at the area of the web corresponding to the zone where the deviation or anomaly has been detected.

Moreover, the control unit also controls a stop of the packaging machine, so that an operator can check and maybe fix the deviation, the status of the tube, and of the components of the packaging machine.

Although the known packaging machines work satisfyingly well, a desire is felt for their further improvement, in particular as per the efficiency of the packaging process, the saving of pourable product and the reduction of their downtime, without however affecting the quality of the packages and/or the pourable product.

### DISCLOSURE OF INVENTION

It is therefore an object of the present invention to provide a method for producing sealed packages which is designed to meet at least one of the above-mentioned drawbacks in a straightforward and low-cost manner.

This object is achieved by a method for producing sealed packages as claimed in the appended independent claim 1.

It is a further object of the invention to provide a packaging machine for producing sealed packages which is designed to meet at least one of the above-mentioned drawbacks in a straightforward and low-cost manner.

This object is achieved by a packaging machine as claimed in the appended independent claim 13.

Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine configured to produce sealed packages containing a pourable product;
Figures 2a and 2b are schematic lateral views, with parts removed for clarity, of the packaging machine of Figure 1 during distinct operative conditions.

### BEST MODE FOR CARRYING OUT THE INVENTION

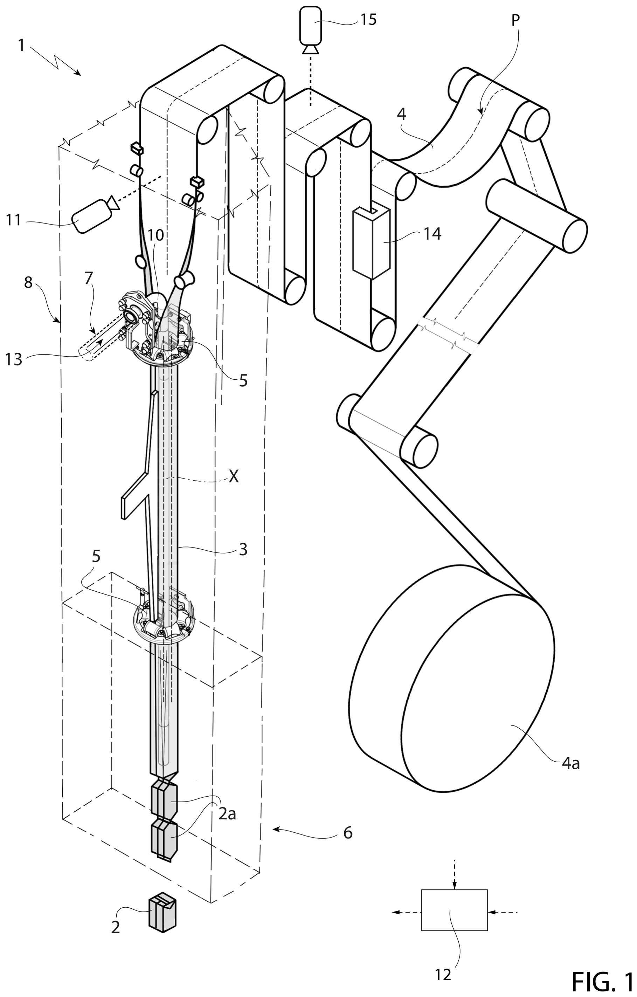

With reference to Figure 1, number 1 indicates as a whole a non-limiting example of a packaging machine configured to produce sealed packages 2 containing a pourable product, preferably a pourable food product such as pasteurized or UHT milk, water, fruit juice, wine, peas, beans, etc.

Packaging machine 1 is configured to form, seal and fold packages 2 starting from a web 4 of packaging material, which is initially wound in a reel 4a, and then folded into a tube 3 of packaging material.

Preferably, the packaging material has a multilayer structure (not shown), and comprises a layer of fibrous material, e.g. paper, covered on both sides with respective layers of heat-sealable material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-sealable material, and is in turn covered with another layer of heat-sealable material, the latter forming the inner face of package 2 eventually contacting the pourable product.

Packaging machine 1 comprises a conveyor configured to advance web 4 along an advancing path P.

In detail, the conveyor is configured to advance a web 4 including a plurality of successive web portions having equal longitudinal length, each package 2 being obtained from a respective web portion.

In one embodiment, the conveyor comprises a plurality of unwinding rollers, as schematically shown in Figure 1.

Packaging machine 1 further comprises:
- a folding device 5 configured to progressively fold web 4 into a tube 3, in a manner known and not described in detail;
- a sealing element 40 for longitudinally sealing tube 3, in a manner known and not described in detail;
- a forming and sealing unit 6 configured to form tube 3 and seal tube 3 along successive transversal cross-sections thereof in order to obtain a sequence of pillow packs 2a from which packages 2 are subsequently obtained;
- a filling device 7 for filling tube 3 (from above) with the pourable product.

In detail, the forming and sealing unit 6 is configured to sequentially impart a predetermined external shape, corresponding to a precursor of the shape of package 2, to successive longitudinal portions of tube 3, and to transversally seal tube 3 at equally spaced cross-sections.

Packaging machine 1 further comprises:
- an isolation chamber 8 internally defining an environment containing a controlled atmosphere, in particular sterile and/or aseptic gas, preferably sterile and/or aseptic air, and housing at least the forming and sealing unit 6, the tube folding device 5, the sealing element 40 and at least part of the filling device 7;
- a folding unit (not shown) configured to sequentially fold packs 2a in order to obtain a plurality of sealed packages 2.

Folding device 5 and sealing element 40 define together a tube forming unit.

Preferably, forming and sealing unit 6 has an axis X along which tube 3 is fed, in use.

Axis X is parallel to a straight direction, which preferably is a straight vertical direction.

Hence, in use, tube 3 is fed along axis X, downwards, and while being filled from above is formed and sealed by forming and sealing unit 6.

More specifically, tube 3 is drawn (downwards) along axis X by forming and sealing unit 6 in a known manner.

In this way, a plurality of pillow packs 2a are obtained.

In light of the above, packaging machine 1 is configured to form and seal a plurality of pillow packs 2a containing the pourable product starting from web 4 and tube 3 and then to fold the pillow packs 2a for obtaining the aforementioned formed, sealed and folded packages 2 containing the pourable product.

Filling device 7 comprises a product filling pipe 10 which is designed to be arranged (at least partially) within tube 3 in formation, i.e. arranged in use within tube 3 so that tube 3 surrounds filling pipe 10, and configured to supply pourable product within tube 3.

In detail, filling pipe 10, and therefore filling device 7, is configured to fill tube 3 with pourable product up to a predetermined level or quantity.

In greater detail, filling device 7 defines, in use, a level of filling of tube 3 with pourable product.

Preferably, at least a portion of filling pipe 10 is arranged coaxially with axis X, i.e. with tube 3.

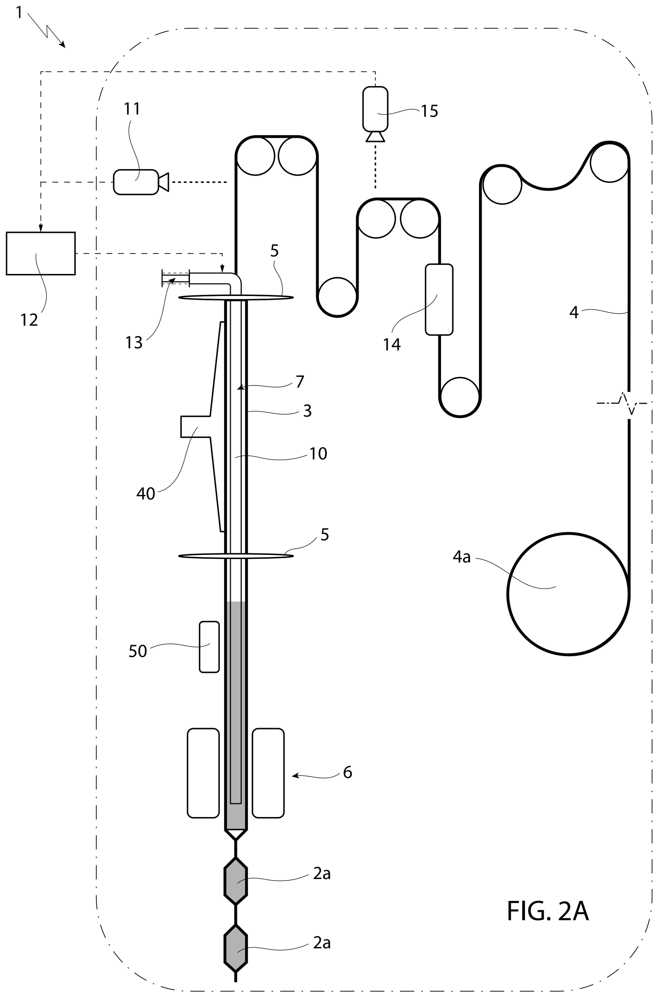

Opportunely, packaging machine 1 also comprises a level sensor 50 (partially and schematically shown in Figures 2a-2b) and designed to detect the filling level (i.e. the amount) of pourable product within tube 3.

Filling pipe 10 is in fluid connection or is controllable to be in fluid connection with a pourable product storage tank (not shown and known as such), which is adapted to store/provide for the pourable product, in particular the sterilized and/or sterile-processed pourable food product, to be packaged.

More in particular, filling device 7 further comprises a valve member (not shown) actuatable to selectively allow the feeding of pourable product from the storage tank into tube 3.

Packaging machine 1 further comprises at least one sensor 11 arranged upstream of the folding device 5, along path P. As exemplified herein, sensor 11 may be positioned immediately upstream of the folding device 5, however the sensor 11 may be positioned at any point of the path P upstream of the folding device 5, e.g. upstream of the isolation chamber 8.

According to the invention, sensor 11 is configured to detect a deviation or anomaly on the web indicative of the state of the packaging material.

Conveniently, sensor 11 is configured to detect such deviation or anomaly on web 4 prior to folding of web 4 into tube 3.

Preferably, sensor 11 is configured to detect such deviation or anomaly upstream of an introduction of the web 4 into isolation chamber 8.

In one embodiment, sensor 11 may be configured to detect a deviation or anomaly in a splicing region between two successive webs 4 spliced to one another.

In detail, sensor 11 may be configured to detect a non-nominal or imperfect or erroneous splice at the splice region between the end portion of a first web 4 and the initial portion of a second web 4.

For example, sensor 11 may be configured to detect a splicing offset along a direction transversal to the longitudinal extension of the spliced webs 4.

Opportunely, sensor 11 is also configured to generate a detection signal correlated to the detection of the deviation or anomaly and indicative of the presence of said deviation or anomaly on the packaging material.

Accordingly, packaging machine 1 further comprises a control unit 12 configured to receive the detection signal from the sensor 11.

According to an important aspect of the present invention, control unit 12 is configured to control an adjustment of the operation of the filling device 7 as a function of the received detection signal.

In particular, control unit 12 is configured to control a reduction of the level of pourable product in tube 3 as a function of said detection signal.

More in particular, control unit 12 is configured to trigger a closing of the aforesaid valve member as a function of the reception of the detection signal from sensor 11, so that tube 3 progressively empties from the pourable product. For example, the closing of the valve member may occur upon reception of the detection signal or after reception, in case the sensor 11 as a function of a distance between sensor 11 and the folding device 5.

In other words, when a sensor, e.g. sensor 11, detects the presence at the web of a deviation or anomaly, control unit 12 controls the closing of the valve member and thereby determines an emptying of the tube 3 from the pourable product as a function of the detection. The control of the closing of the valve member may occur after the reception of the detection signal, e.g. based on a speed of advancement of the web 4 of packaging material and/or of the distance between the sensor, e.g. sensor 11, and the folding device 5.

In fact, due to the closing of the valve member, no more product is supplied into tube 3; since tube 3 is advancing downwards, as explained above, tube 3 rapidly empties once the last section of tube 3 containing the remaining pourable product advances and is processed (i.e. formed and sealed) by forming and sealing unit 6.

Figure 2a schematically shows the packaging machine 1 during a nominal operative condition; the tube 3 is filled with the pourable product at the predetermined level for nominally carrying out the packaging process.

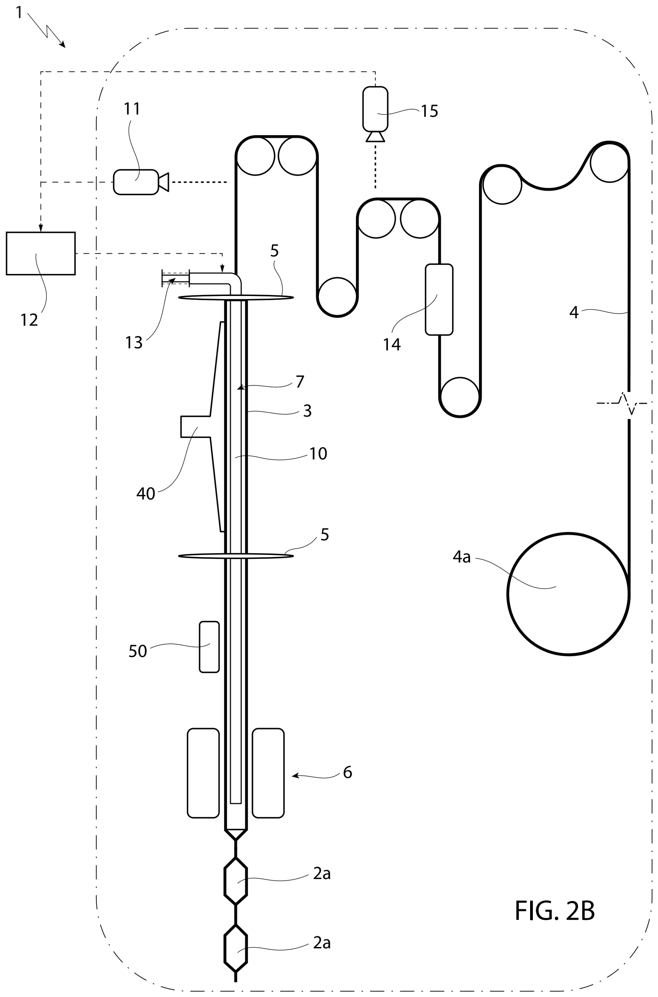

Figure 2b schematically shows the packaging machine 1 during an operative condition whereby the operation of filling device 7 is adjusted: sensor 11 has detected a deviation or anomaly and control unit 12 has triggered the closing of the valve member, thereby leading to the reduction of level of pourable product within tube 3.

Conveniently, packaging machine 1 further comprises pressurizing means 13 configured to feed sterile compressed gas into tube 3 for pressurizing tube 3.

Such pressurizing means 13 are well known and will not be described in detail herein.

For example, pressurizing means 13 are known from EP-A-3456638, from the same Applicant.

Pressurizing means 13 are configured to establish an overpressure within tube 3. Such overpressure allows to maintain the shape and configuration of tube 3 even when tube 3 is emptied from the pourable product following a detection of a deviation or anomaly.

In practice, the overpressure within tube 3 is able to counteract the stresses and forces exerted thereon by forming and sealing assembly 6, thereby allowing the production of packs 2a which are devoid of pourable product and just filled with compressed gas, but which retain substantially the same shape.

Opportunely, the control unit 12 is also configured to control a discard of such empty packages 2.

Thanks to the configuration described above, i.e. thanks to the behavior of the packaging machine 1 upon detection of a deviation or anomaly at the packaging material, the stops of packaging machine 1 are significantly reduced.

In fact, a stop of the packaging machine 1 when a deviation or anomaly is detected is no longer needed per se: packaging machine 1 can continue to produce packages 2 even from the region of web 4 at which the deviation or anomaly has been detected; such packages 2 are nominally formed, but will be discarded since they only (or mostly) contain compressed gas.

Hence, the efficiency of the packaging machine 1 and of the packaging process is increased, since the stops are reduced or at least avoided.

The overpressure within such packages ensures that in the remote event that the sealing of the tube 3 breaks due to the deviation or anomaly a contamination is completely avoided.

Moreover, the temporary reduction of the level of the pourable product in the tube 3, which preferably only lasts for the transit of the region of tube 3, i.e. of web 4, along which the deviation or anomaly has been detected, determines a significant reduction of the stresses within tube 3.

In fact, the product may exert a pressing action from within tube 3. If a deviation or anomaly is present in the packaging material, such pressing action may increase the risk of a failure of the sealing of tube 3.

Accordingly, the reduction of the quantity of pourable product within tube 3 significantly limits such risk. Therefore, the risk of needing to stop the machine due to a tube failure is significantly reduced.

In addition, since the supply of pourable product is temporarily stopped, no pourable product will be discarded together with the discarded packages 2.

Hence, a significant saving of pourable product is obtained.

In summary, thanks to the aforementioned configuration, significant saving of pourable product and reduction of the machine downtime, without however affecting the quality of the packages and/or the pourable product, can be obtained. Therefore, a more streamlined packaging process is defined, reducing the stops and the operator interventions and ensuring the machine operative continuity.

It is to be noted that the reduction of the level of product, and preferably the emptying of the tube 3, is only temporary and occurs in correspondence of the transit of the region of the web 4 at which the deviation or anomaly is detected, for example the aforementioned spliced region.

To this end, control unit 12 is configured to adjust the operation of the filling device 7, i.e. to reduce the level of pourable product within tube 3, as a function of the position of sensor 11 along path P, as a function of a speed of advancement of the web 4 along path P and/or as a function of the length of the aforementioned web portions.

In this way, a sort of tracking of the deviation or anomaly along path P is implemented, thereby allowing the reduction of the total discarded packages 2.

Preferably, packaging machine 1 further comprises an applicator device 14 arranged along path P in a position upstream of folding device 5.

Moreover, applicator device 14 is conveniently arranged upstream of sensor 11.

Applicator device 14 is configured to apply a sealing strip of heat-sealable material (not shown) to a longitudinal edge of web 4.

In detail, a first longitudinal portion of the sealing strip is applied and heat-sealed to a first longitudinal edge of the web 4, in particular the sealing strip is applied on the face of the packaging material eventually forming the inside of the packages 2. After such application, a second longitudinal portion of the sealing strip projects from the first longitudinal edge.

On interacting with the folding device 5, a second longitudinal edge of the web 4 is laid on the outside of the first longitudinal edge with respect to the axis X of the tube 3 being formed. In detail, the sealing strip is located entirely within the tube 3, and the face of the second longitudinal edge facing the axis X is superimposed partly on the second portion of the sealing strip and partly on the face of the first longitudinal edge located on the side opposite to the first portion of the sealing strip.

At this point, the sealing strip is applied to the web 4 by performing a heating step and a pressing step.

Advantageously, packaging machine 1 comprises a further sensor 15 arranged downstream of the applicator device 14 and configured to detect a deviation or anomaly at said sealing strip.

Accordingly, control unit 12 is configured to receive the detection signal from the further sensor 15 and to adjust the operation of the filling device 7, i.e. to trigger a reduction of the level of the product within tube 3, as a function of the detection signal received from the further sensor 15.

In one embodiment, packaging machine 1 may comprise additional sensors along path P.

Accordingly, the deviation or anomaly may be defined by (the list is not exhaustive):
- a deviation or anomaly at the splicing region between two successive webs 4 of packaging material; and/or
- a deviation or anomaly at the strip of heat-sealable material applied on the web 4; and/or
- a deviation or anomaly at a prelaminated hole obtained on the web 4; and/or
- a deviation or anomaly at a closure member, for example a neck of a cap, applied on the web 4.

Advantageously, control unit 12 may be configured, in certain cases, to control a reduction of the advancing speed of web 4 along path P.

In this way, the stresses on tube 3, and especially at the region of tube 3 at which the deviation or anomaly is detected, are further reduced. Hence, the risk of a tube failure is even more prevented.

Advantageously, control unit 12 may be further configured to interrupt the advancing of web 4, and preferably to stop packaging machine 1, if the detection of the deviation or anomaly is repeated over time or is non-temporary.

In this way, significant damage to the web 4 or to the components of the machine 1, or undesired jammings or large waste of material can be avoided.

From the foregoing, it is clear how the packaging machine 1 according to the present invention allows to implement a method for producing sealed packages 2 containing a pourable product, the method comprising the steps of:
a) advancing a web 4 of packaging material along an advancing path P;
b) folding the web 4 into a tube 3;
c) filling the tube 3 with the pourable product by means of a filling device 7;
d) detecting a deviation or anomaly at the web 4 indicative of the state of the packaging material, e.g. anomaly on a surface of the packaging material, on a strip attached on the web 4, on an opening device attached on the surface of the web 4 and/or on a respective portion of the tube to be formed from the defective web of packaging material;
e) adjusting the operation of the filling device 7 as a function of the detection.

Preferably, the step c) of filling comprises filling the tube 3 up to a predetermined level;
and wherein the method comprises the step of:
f) reducing the level of pourable product in the tube 3 as a function of said detection.

Preferably, the step c) of filling comprises controlling a valve member to selectively allow the feeding of pourable product into the tube 3;
and wherein the step f) comprises closing the valve member upon detection of said deviation or anomaly.

Preferably, the method further comprises the steps of:
g) advancing the tube 3 along a straight direction during the step c) of filling;
h) repeatedly forming and transversally sealing the tube 3 at successive cross-sections thereof, thereby obtaining a plurality of packs 2a from which the packages 2 are subsequently obtained.

Advantageously, the step f) is carried out during the step g) of advancing, so that the level of the pourable product in tube 3 progressively decreases due to the advancement of the tube 3 and due to the stopped feeding of the pourable product therein.

Preferably, the step f) of reducing the level comprises emptying the tube 3 from the pourable product.

Advantageously, the method further comprises the step of:
i) feeding sterile compressed gas into the tube 3 for pressurizing the tube 3.

Conveniently, the step d) of detecting is performed at a position along the advancing path P upstream of the folding of the web 4 into a tube 3, i.e. upstream of folding device 5.

In one embodiment, the method further comprises the step of:
j) applying a strip of heat-sealable material to a longitudinal edge of the web 4, at a position along the advancing path P upstream of the folding of the web 4 into a tube 3, i.e. upstream of folding device 5.

Preferably, the step d) of detecting is performed at a position along the advancing path P downstream of the application of said strip.

Preferably, the step d) of detecting includes:
- detecting a deviation or anomaly at a splicing region between two successive webs 4 of packaging material; and/or
- detecting a deviation or anomaly at a strip of heat-sealable material applied on the web 4; and/or
- detecting a deviation or anomaly at a prelaminated hole obtained on the web 4; and/or
- detecting a deviation or anomaly at a closure member applied on the web 4.

Preferably, the step a) of advancing comprises advancing a web 4 including a plurality of successive web portions having equal longitudinal length, each package 2 being obtained from a respective web portion.

Conveniently, the step d) of detecting is performed at a predetermined position along the advancing path P.

Advantageously, the step e) of adjusting is performed as a function of said predetermined position, as a function of a speed of advancement of the web 4 along the advancing path P and as a function of the length of the web portions.

Preferably, the step a) of advancing comprises advancing the web 4 at a predetermined speed.

Conveniently, the method comprises the step of:
k) reducing said predetermined speed upon said detection.

Advantageously, the method comprises the step of:
l) interrupting the step a) of advancing if the detection of said deviation or anomaly is repeated over time or is non-temporary.

The advantages of the packaging machine 1 and of the related method for producing sealed packages 2 according to the present invention will be clear from the foregoing description.

In particular, thanks to the configuration described above, i.e. thanks to the behavior of the packaging machine 1 upon detection of a deviation or anomaly at the packaging material, the stops of packaging machine 1 are significantly reduced.

In fact, a stop of the packaging machine 1 when a deviation or anomaly is detected is no longer needed per se: packaging machine 1 can continue to produce packages 2 even from the region of web 4 at which the deviation or anomaly has been detected; such packages 2 are nominally formed, but will be discarded since they only (or mostly) contain compressed gas.

Hence, the efficiency of the packaging machine 1 and of the packaging process is increased, since the stops are reduced or at least avoided.

The overpressure within such packages ensures that in the remote event that the sealing of the tube 3 breaks due to the deviation or anomaly a contamination is completely avoided, due to the overpressure.

Moreover, the temporary reduction of the level of the pourable product in the tube 3, which preferably only lasts for the transit of the region of tube 3, i.e. of web 4, along which the deviation or anomaly has been detected, determines a significant reduction of the stresses within tube 3.

In fact, the product may exert a pressing action from within tube 3. If a deviation or anomaly is present in the packaging material, such pressing action may increase the risk of a failure of the sealing of tube 3.

Accordingly, the reduction of the quantity of pourable product within tube 3 significantly limits such risk. Therefore, the risk of needing to stop the machine due to a tube failure is significantly reduced.

In addition, since the supply of pourable product is temporarily stopped, no pourable product will be discarded together with the discarded packages 2.

Hence, a significant saving of pourable product is obtained.

In summary, thanks to the aforementioned configuration, significant saving of pourable product and reduction of the machine downtime, without however affecting the quality of the packages and/or the pourable product, can be obtained. Therefore, a more streamlined packaging process is defined, reducing the stops and the operator interventions and ensuring the machine operative continuity.

Clearly, changes may be made to packaging machine 1 and to the related method as described herein without, however, departing from the scope of protection as defined in the accompanying claims.

## Claims

1. Method for producing sealed packages (2) containing a pourable product, the method comprising the steps of:
a) advancing a web (4) of packaging material along an advancing path (P);
b) folding the web (4) into a tube (3);
c) filling the tube (3) with the pourable product by means of a filling device (7);
d) detecting a deviation or anomaly at the web (4) indicative of the state of the packaging material;
e) adjusting the operation of the filling device (7) as a function of the detection.

2. Method as claimed in the previous claim, wherein the step c) of filling comprises filling the tube (3) up to a predetermined level;
and wherein the method comprises the step of:
f) reducing the level of pourable product in the tube (3) as a function of said detection.

3. Method as claimed in the previous claim, wherein the step f) of reducing the level comprises emptying the tube (3) from the pourable product.

4. Method as claimed in claim 2 or the previous claim, wherein the method further comprises the steps of:
g) advancing the tube (3) along a straight direction during the step c) of filling;
h) repeatedly forming and transversally sealing the tube (3) at successive cross-sections thereof, thereby obtaining a plurality of packs (2a) from which the packages (2) are subsequently obtained;
and wherein the step f) is carried out during the step g) of advancing, so that the level of the pourable product in the tube (3) progressively decreases due to the advancement of the tube (3) and due to the stopped feeding of the pourable product therein.

5. Method as claimed in any one of the foregoing claims, and further comprising the step of:
i) feeding sterile compressed gas into the tube (3) for pressurizing the tube.

6. Method as claimed in any one of the foregoing claims, wherein the step d) of detecting is performed at a position along the advancing path (P) upstream of the folding of the web (4) into a tube (3), preferably upstream of an introduction of the web (4) of packaging material into an isolation chamber (8) internally defining an environment containing a controlled atmosphere.

7. Method as claimed in the previous claim, and further comprising the step of:
j) applying a strip of heat-sealable material to a longitudinal edge of the web (4), at a position along the advancing path (P) upstream of the folding of the web (4) into a tube (3);
and wherein the step d) of detecting is performed at a position along the advancing path (P) downstream of the application of said strip.

8. Method as claimed in any one of the foregoing claims, wherein the step d) of detecting includes at least one of:
- detecting a deviation or anomaly on a surface of the web (4) of packaging material; and/or
- detecting a deviation or anomaly at a splicing region between two successive webs (4) of packaging material; and/or
- detecting a deviation or anomaly at a strip of heat-sealable material applied on the web (4); and/or
- detecting a deviation or anomaly at a prelaminated hole obtained on the web (4); and/or
- detecting a deviation or anomaly at a closure member applied on the web (4).

9. Method as claimed in any one of the foregoing claims, wherein the step a) of advancing comprises advancing a web (4) including a plurality of successive web portions having equal longitudinal length, each package (2) being obtained from a respective web portion;
wherein the step d) of detecting is performed at a predetermined position along the advancing path (P);
wherein the step e) of adjusting is performed as a function of said predetermined position, as a function of a speed of advancement of the web (4) along the advancing path (P) and/or as a function of the length of the web portions.

10. Method as claimed in any one of the foregoing claims, wherein the step a) of advancing comprises advancing the web (4) at a predetermined speed;
and wherein the method comprises the step of:
k) reducing said predetermined speed upon said detection.

11. Method as claimed in any one of the foregoing claims, and comprising the step of:
l) interrupting the step a) of advancing if the detection of said deviation or anomaly is repeated over time or is non-temporary.

12. Computer program product loadable in one or more memories of at least one control unit and comprising software code portions comprising instructions which, when executed, cause the at least one control unit to perform the steps of the method of any one of the preceding claims.

13. Packaging machine (1) for the production of sealed packages (2) containing a pourable product starting from a web (4) of packaging material, the packaging machine (1) comprising:
- a conveyor for advancing the web (4) along an advancing path (P);
- a folding device (5) for folding the web (4) into a tube (3);
- a filling device (7) for filling the tube (3) with the pourable product;
- at least one sensor (11, 15) arranged upstream of the folding device (7) and configured to detect a deviation or anomaly at the web (4) indicative of the state of the packaging material;
- a control unit (12) configured to receive a detection signal from the sensor (11) indicative of the presence of said deviation or anomaly;
wherein the control unit (12) is configured to control an adjustment of the operation of the filling device (7) as a function of the received detection signal.

14. Packaging machine (1) as claimed in the previous claim, wherein the filling device (7) is configured to fill the tube (3) up to a predetermined level;
and wherein the control unit (12) is configured to control a reduction of the level of pourable product in the tube (3) as a function of said detection signal.

15. Packaging machine (1) as claimed in claims 13 or 14, and further comprising pressurizing means (13) configured to feed sterile compressed gas into the tube (3) for pressurizing the tube (3).

16. Packaging machine (1) as claimed in any one of the claims 13 to 15, wherein the conveyor is configured to advance a web (4) including a plurality of successive web portions having equal longitudinal length, each package (2) being obtained from a respective web portion;
and wherein the control unit (12) is configured to adjust the operation of the filling device (7) as a function of the position of said sensor (11) along the advancing path (P), as a function of a speed of advancement of the web (4) along the advancing path (P) and/or as a function of the length of the web portions.
